# EUROPEAN PATENT APPLICATION

(11) **EP 3 032 098 A1**
(43) Date of publication of application: **15.06.2016**
(21) Application number: 14834695.0
(22) Date of filing: 04.08.2014
(51) Int. Cl.: F03D 15/00, F16D 41/06

(54) **WIND POWER GENERATOR DEVICE AND ROTATION TRANSMISSION DEVICE USED IN SAME**

(30) Priority: 05.08.2013 JP 2013162417
(71) Applicant: JTEKT Corporation, Osaka-shi, Osaka 542-8502 (JP)
(72) Inventor: FUJIWARA, Hideki, Osaka-shi Osaka 542-8502 (JP)
(74) Representative: Winter, Brandl, Fürniss, Hübner, Röss, Kaiser, Polte - Partnerschaft mbB
(86) International application number: PCT/JP2014/070481
(87) International publication number: WO 2015/019998

(57) **Abstract**

A wind power generator device includes: a windmill which rotates by receiving wind power; a power generator including a rotor; and a rotation transmission device which transmits rotation of the windmill to the rotor without a speed increase. The rotation transmission device includes a one-way clutch which makes a connection integrally and rotatably between the windmill and the rotor in a state in which a rotation speed of the windmill is higher than a rotation speed of the rotor, and which releases the connection in a state in which the rotation speed of the windmill is lower than the rotation speed of the rotor.

## Description

### Technical Field

An aspect of the present invention relates to a wind power generator device and a rotation transmission device used in same.

### Background Art

Although wind power generator devices that generate power by using wind power energy are generally installed in plane areas and mountainous areas on land where strong wind power can be obtained or on the sea, in recent years, more and more have been installed on the sea as suitable places on land decreases. However, on the sea, the installation cost is high compared with on land, and maintenance after the installation is difficult. Therefore, installing a small number of large wind power generator devices is more efficient than installing a large number of small wind power generator devices, and for this reason, wind power generator devices for installation on the sea are becoming larger.

### Related Art Documents

### Patent Documents

Patent Document 1: JP-A-2013-60825

### Summary of the Invention

### Problem to be Solved by the Invention

Since the wind power generator devices installed on the sea are difficult to maintain as mentioned above, it is desirable that the speed increaser comparatively liable to break be not provided between the shaft of the windmill and the rotor of the power generator and these be coupled directly. In this case, since the number of rotations of the rotor inevitably decreases, to obtain an output of a predetermined frequency, this is handled by increasing the pole number, and the size of the rotor increases accordingly. Moreover, the size increase of the wind power generator device increases the size of the windmill (the blade diameter). For this reason, the total mass of the rotor and the windmill coupled together increases, so that the natural frequency thereof decreases. Consequently, the number of rotations of the windmill and the rotor and the natural frequency become close and this increases the possibility of occurrence of resonance, so that there is a possibility that rotation fluctuations and vibrations of the rotor are extremely large.

An object of an aspect of the present invention is to suppress the rotation fluctuations and vibrations of the rotor due to resonance in a wind power generator device of a type where the windmill and the rotor of the power generator are coupled directly.

### Means for Solving the Problem

One aspect of the present invention includes a wind power generator device including: a windmill which rotates by receiving wind power; a power generator including a rotor; and a rotation transmission device which transmits rotation of the windmill to the rotor without a speed increase, wherein the rotation transmission device includes a one-way clutch which makes a connection integrally and rotatably between the windmill and the rotor in a state in which a rotation speed of the windmill is higher than a rotation speed of the rotor, and releases the connection in a state in which the rotation speed of the windmill is lower than the rotation speed of the rotor.

Moreover, another aspect of the present invention includes a rotation transmission device which transmits a rotation of a windmill which rotates by receiving wind power to a rotor of a power generator without a speed increase, the rotation transmission device including a one-way clutch which makes connection integrally and rotatably between the windmill and the rotor in a state in which a rotation speed of the windmill is higher than a rotation speed of the rotor, and which releases the connection in a state in which the rotation speed of the windmill is lower than the rotation speed of the rotor.

In the wind power generator device and the rotation transmission device according to the aspects of the present invention, the connection between the windmill and the rotor is released by the one-way clutch in a state in which the rotation speed of the windmill is lower than the rotation speed of the rotor. For this reason, even when the masses of the windmill and the rotor increase due to increase of the size of the wind power generator device, and the natural frequency at the integrated rotation of the windmill and the rotor becomes low, since the connection between the windmill and the rotor is released by the one-way clutch, the windmill and the rotor become individual rotating elements, and the natural frequency of each of the windmill and the rotor increases. Consequently, the condition for resonance is hardly satisfied, whereby the occurrence of the rotation fluctuations and vibrations of the rotor can be suppressed.

The above-described one-way clutch includes: an inner ring and an outer ring which are disposed to face each other in a radial direction; and an engagement element which is disposed between the inner ring and the outer ring, and which engages the inner ring and the outer ring to integrally rotatably connect the inner ring and the outer ring, and at least one of the inner ring and the outer ring is formed of a plurality of divisional elements divided in a circumferential direction.

With this structure, even if the size of the wind power generator device increases and the size of the one-way clutch increases accordingly, by the inner ring and the outer ring being formed of a plurality of divisional elements, the size of each individual part is reduced, whereby the manufacture thereof can be facilitated.

Preferably, a plurality of cam surfaces which form wedge-shaped spaces between the inner ring and the outer ring are formed on the inner ring or the outer ring, and the inner ring or the outer ring including the cam surfaces is divided by each of the cam surfaces.

With this structure, since no single cam surface is formed so as to extend over more than one divisional element and no joints are formed on the cam surfaces, the engagement element can be smoothly moved on the cam surfaces.

Preferably, the above-described one-way clutch includes: an inner ring and an outer ring which are disposed to face each other in a radial direction; an engagement element which is disposed between the inner ring and the outer ring, and which engages the inner ring and the outer ring to integrally rotatably connect the inner ring and the outer ring; and a cage which holds the engagement element, and the cage is formed of a plurality of divisional elements divided in a circumferential direction.

With this structure, even if the size of the wind power generator device increases and the size of the one-way clutch increases accordingly, by the cage being formed of a plurality of divisional elements, the size of each individual part is reduced, whereby the manufacture thereof can be facilitated.

Aspects of the present invention are particularly effective, for example, in a large-size power generator device where an outside diameter of the one-way clutch is equal to or larger than 1 meter.

### Advantages of the Invention

According to the aspects of the present invention, in a wind power generator device of a type where the windmill and the rotor of the power generator are coupled directly, the rotation fluctuations and vibrations of the rotor due to resonance can be suppressed.

### Brief Description of the Drawings

FIG. 1 is a schematic side view of a wind power generator device according to an embodiment of the present invention.
FIG. 2 is a cross-sectional view showing an enlargement of a part of coupling of a main shaft of a windmill and a rotor of a power generator.
FIG. 3 is a longitudinal cross-sectional view showing an enlargement of a one-way clutch unit.
FIG. 4 is a transverse cross-sectional view of the one-way clutch.

### Mode for Carrying Out the invention

Hereinafter, an embodiment of the present invention will be described in detail with reference to the attached drawings.

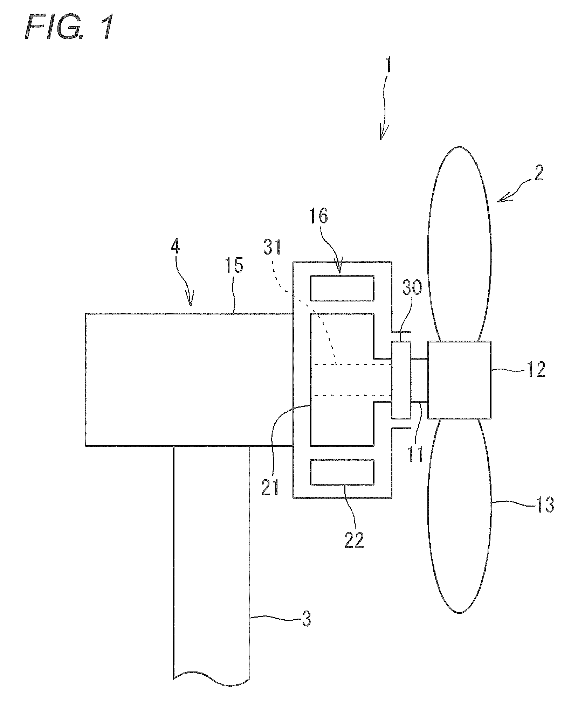

FIG. 1 is a schematic side view of a wind power generator device according to the embodiment of the present invention.

The wind power generator device 1 is provided with a windmill 2, a support column 3, a nacelle 4 and the like. The windmill 2 is a part that rotates by receiving wind in order to generate the rotative power for driving a power generator 16 of the wind power generator device 1. Specifically, the windmill 2 is provided with a main shaft 11, a hub 12 provided at the end of the main shaft 11 and a plurality of blades 13 provided on the outer periphery of the hub 12. These blades 13 receive wind power to thereby rotate the main shaft 11 through the hub 12. The nacelle 4 is formed of the power generator 16, a convertor, a controller and the like accommodated in a casing 15. The power generator 16 is disposed on the front side of the casing 15 and in the rear neighborhood of the windmill 2. The support column 3 supports the nacelle 4 in such a manner that it can horizontally turn around the shaft center in the vertical direction.

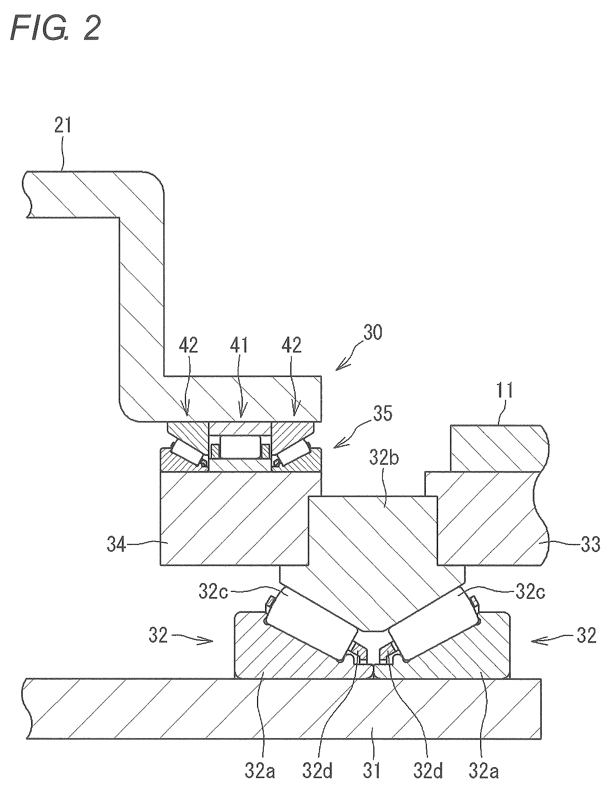

The power generator 16 is, for example, a synchronous generator, and is provided with a rotor 21 and a stator 22 disposed on the outer periphery side of this rotor 21. And the rotor 21 is coupled to the main shaft 11 of the windmill 2 through a rotation transmission device 30. The main shaft 11 and the rotor 21 are rotatably supported through a roller bearing 32 (see FIG. 2) by a support shaft 31 unrotatably fixed in the nacelle 4. The rotation transmission device 30 transmits the rotation of the main shaft 11 of the windmill 2 to the rotor 21 without a speed increase.

FIG. 2 is a cross-sectional view showing an enlargement of the part of coupling of the main shaft 11 of the windmill 2 and the rotor 21 of the power generator 16.

The support shaft 31 is a fixed shaft formed in a tubular shape, and has an inside diameter where people can enter and exit, for example, an inside diameter of approximately 1 meter to 2 meters.

The roller bearing 32 is formed of tapered roller bearings disposed in double rows. This tapered roller bearing 32 is provided with a pair of inner rings 32a, an outer ring 32b disposed on the outside in the radial direction of the inner rings 32a, two rows of tapered rollers 32c rollably disposed between the inner rings 32a and the outer ring 32b and cages 32d that hold the circumferential intervals between the tapered rollers 32c. The inner rings 32a are fitted on the outer peripheral surface of the support shaft 31. On the inner peripheral surface of the outer ring 32b, two raceway surfaces are formed. To one side in the axial direction of the outer ring 32b (the right side in FIG. 2), a coupling member 33 is fixed, and to the other side in the axial direction (the left side in FIG. 2), a coupling member 34 is fixed. Therefore, the coupling members 33 and 34 are relatively rotatably coupled to the support shaft 31 through the roller bearing 32.

The coupling members 33 and 34 are both formed in a ring shape. To the outer peripheral surface of one coupling member 33, the inner peripheral surface of the tubular main shaft 11 is integrally rotatably fixed. Moreover, to the outer peripheral surface of the other coupling member 34, the rotor 21 is coupled through a one-way clutch unit 35 forming the rotation transmission device 30.

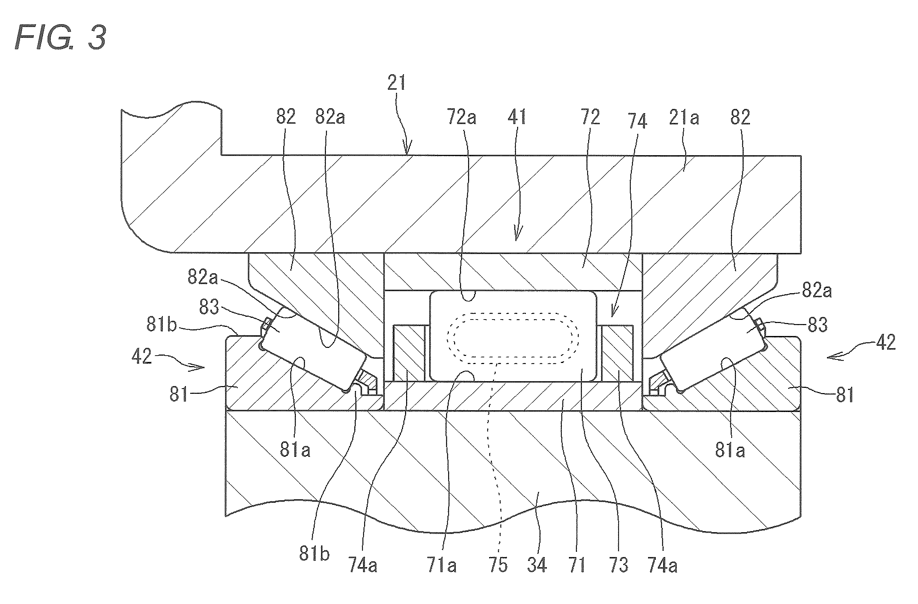

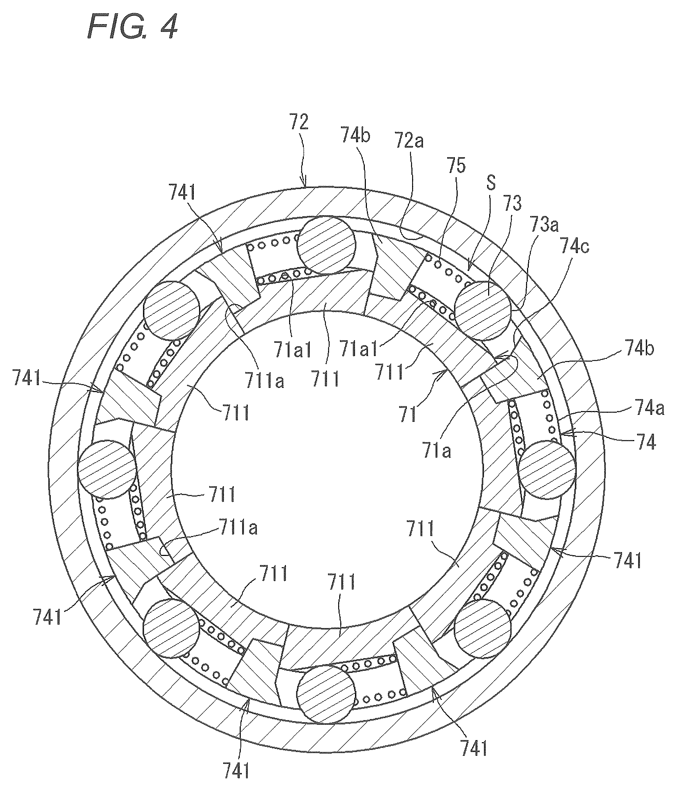

FIG. 3 is a longitudinal cross-sectional view showing an enlargement of the one-way clutch unit 35. FIG. 4 is a transverse cross-sectional view of the one-way clutch.

The one-way clutch unit 35 has a one-way clutch 41 and rolling bearings 42. The one-way clutch 41 is provided with an inner ring 71, an outer ring 72 and a plurality of rollers (engagement elements) 73 disposed between an outer peripheral surface 71 a of the inner ring 71 and an inner peripheral surface 72a of the outer ring 72.

The inner ring 71 is externally fitted on the central part in the axial direction of the coupling member 34 and fixed, and rotates integrally with the coupling member 34. On the other hand, the outer ring 72 is internally fitted on the inner peripheral surface of a cylindrical shaft portion 21a of the rotor 21 and fixed, and rotates integrally with the rotor 21. The rollers 73 are cylindrical, and in the present embodiment, eight rollers are disposed in the circumferential direction. Although the details will be given later, the inner ring 71 of the present embodiment is formed of a plurality of divisional elements 711 divided in the circumferential direction.

The one-way clutch 41 is further provided with a cage 74 that holds the rollers 73 at predetermined intervals in the circumferential direction and a plurality of elastic members 75 that elastically push the rollers 73 in one direction. The cage 74 has a pair of annular portions 74a facing in the axial direction and a plurality of columnar portions 74b extending in the axial direction and spaced uniformly in the circumferential direction between the annular portions 74a and coupling the annular portions 74a. A plurality of pockets 74c are formed between the annular portions 74a and the adjoining columnar portions 74b, and the rollers 73 are accommodated one in each pocket 74c. The elastic members 75 are each formed of a compression coil spring, and are accommodated one in each pocket 74c of the cage 74 and attached to the columnar portions 74b. Although the details will be given later, the cage 74 is formed of a plurality of divisional elements 741 divided in the circumferential direction.

In FIG. 4, flat cam surfaces 71a1 of the same number (eight) as that of the rollers 73 are formed on the outer peripheral surface 71 a of the inner ring 71, and the inner peripheral surface 72a of the outer ring 72 is a cylindrical surface. Between the cam surfaces 71a1 of the inner ring 71 and the cylindrical surface of the outer ring 72, a plurality of (eight) wedge-shaped spaces S are formed in the circumferential direction. The rollers 73 are disposed one in each wedge-shaped space S, and the elastic members 75 push the rollers 73 in a direction in which the wedge-shaped space S become narrower. The outer peripheral surface of each roller 73 is a contact surface 73a that is in contact with the cam surface 71a1 of the inner ring 71 and the cylindrical surface of the outer ring 72, and this contact surface 73a is formed straightly in the width direction (the axial direction). The one-way clutch 41 is in an environment where a grease as a lubricant using ester as the base oil and a urea material or the like as the thickner and being insusceptible to temperature changes is provided between the inner and outer rings 71 and 72.

The inner ring 71 is formed by coupling in the circumferential direction eight divisional elements (inner ring divisional elements) 711 each having one cam surface 71a1. The inner ring divisional elements 711 are coupled, for example, by bolts or welding. The inner ring 71 being annular by the plurality of inner ring divisional elements 711 being coupled together is relatively unrotatably joined to the outer peripheral surface of the coupling member 34 by slide prevention means such as key joining, spline joining or serration joining. Thereby, even if the inner ring 71 is formed of the plurality of divisional elements 711, a circumferential slide between the coupling member 34 and the inner ring 71 is prevented. For this reason, the torque transmission between the windmill and the rotor is not damaged, and a large torque can be transmitted.

Moreover, the cage 74 is divided into the eight divisional elements (cage divisional elements) 741 in correspondence with the inner ring divisional elements 711. The cage divisional elements 741 each have one columnar portion 74b and part of the annular portion 74a extending toward the adjoining other columnar portion 74b.

A groove 711 a is formed at one end portion in the circumferential direction on the outer periphery side of each inner ring divisional element 711. And part of the inner periphery side of the columnar portion 74b of the cage divisional element 741 is fitted in the groove 711 a. Therefore, the cage divisional elements 741 are each fixed by being sandwiched between the circumferentially adjoining inner ring divisional elements 711.

In the one-way clutch 41 structured as described above, when the rotation speed of the windmill 2 is higher than the rotation speed of the rotor 21 by the windmill 2 rotating with increasing speed, the inner ring 71 relatively rotates in one direction (the counterclockwise direction in FIG. 4) with respect to the outer ring 72. In this case, by the pressing force of the elastic members 75, the rollers 73 slightly move in a direction in which the wedge-shaped spaces S become narrower so that the contact surfaces 73a of the rollers 73 are in pressure contact with the outer peripheral surface 71 a of the inner ring 71 and the inner peripheral surface 72a of the outer ring 72, which brings the one-way clutch 41 into a condition where the rollers 73 engage between the inner and outer rings 71 and 72. This enables the inner and outer rings 71 and 72 to integrally rotate in the one direction, so that the windmill 2 and the rotor 21 can be integrally rotatably connected.

Moreover, when the rotation of the windmill 2 becomes a constant speed rotation after the rotation with increasing speed and the rotation speed of the windmill 2 becomes the same as the rotation speed of the rotor 21, the rollers 73 are held in the condition of engaging between the inner and outer rings 71 and 72. For this reason, the one-way clutch 41 maintains the integral rotation of the inner and outer rings 71 and 72 in the one direction, so that the windmill 2 and the rotor 21 continue to rotate integrally.

On the other hand, when the rotation speed of the windmill 2 is lower than the rotation speed of the rotor 21 by the windmill 2 rotating with decreasing speed, the inner ring 71 behaves so as to relatively rotate in the other direction (the clockwise direction in FIG. 4) with respect to the outer ring 72. In this case, the engagement between the rollers 73 and the inner and outer rings 71 and 72 is released by the rollers 73 slightly moving in a direction in which the wedge-shaped spaces S become wider against the pressing force of the elastic members 75. As described above, the windmill 2 and the rotor 21 are disconnected by the engagement of the rollers 73 being released.

In FIG. 3, the pair of rolling bearings 42 are both tapered roller bearings, are disposed between the coupling member 34 and the cylindrical shaft portion 21 a of the rotor 21, and relatively rotatably support them. These rolling bearings 42 are provided with an inner ring 81, an outer ring 82 and a plurality of tapered rollers 83 rollably disposed between the inner ring 81 and the outer ring 82.

The inner ring 81 has inner ring raceway surfaces 81 a formed on the outer periphery and inner ring brim portions 81 b formed in such a manner as to protrude outward in the radial direction on both sides in the axial direction of the inner ring raceway surfaces 81a. Both end surfaces of the tapered rollers 83 are in slide contact with the inner side surfaces of the inner ring brim portions 81 b. The end surface in the axial direction of the inner ring 81 abuts on the end surface in the axial direction of the inner ring 71 of the one-way clutch 41.

The outer ring 82 has an outer ring raceway surface 82a formed on the inner periphery. The end surface in the axial direction of the outer ring 82 abuts on the end surface in the axial direction of the outer ring 72 of the one-way clutch 41.

In the wind power generator device 1 of the present embodiment, when the rotation speed of the windmill 2 becomes lower than the rotation speed of the rotor 21 by the one-way clutch 41 disposed between the main shaft 11 of the windmill 2 and the rotor 21 of the power generator 16, the connection between the windmill 2 and the rotor 21 can be shut off. That is, even if the rotation speed of the windmill 2 abruptly decreases because of a reduction in wind power, the rotation of the rotor 21 of the power generator 16 can be prevented from decreasing, and the rotor 21 can be continuously rotated by inertia. Therefore, reduction in the average rotation speed of the rotor 21 can be suppressed, so that the power generation efficiency of the power generator 16 can be improved.

Moreover, since the rolling bearings 42 that relatively rotatably support the coupling member 34 and the rotor 21 are disposed between them, when the engagement between the rollers 73 and the inner and outer rings 71 and 72 is released at the one-way clutch 41 to thereby form a clearance between the rollers 73 and the inner and outer rings 71 and 72 in the wedge-shaped space S, the coupling member 34 and the rotor 21 can be prevented from relatively moving in the radial direction with respect to each other by the rolling bearings 42. Consequently, the rotor 21 can be prevented from rattling in the radial direction while the wind power generator device 1 is operating.

The wind power generator device 1 of the present embodiment is a large device installed on the sea and the like. The outside diameter of the one-way clutch 41 is equal to or larger than 1 meter, for example, approximately 2 meters to 3 meters. For this reason, in the present embodiment, by adopting a structure where the inner ring 71 and the cage 74 are divided in the circumferential direction, the divisional elements are reduced in size, which facilitates manufacture.

Moreover, since the inner ring divisional elements 711 are divided every cam surface 71 a1, no cam surface 71a1 extends over more than one inner ring divisional elements 711, so that no joints are formed on the cam surfaces 71a1. Consequently, the rollers 73 can be smoothly rolled on the cam surfaces 71a1.

Since the cage divisional elements 741 are fixed by being sandwiched between the circumferentially adjoining inner ring divisional elements 711, a member for fixing the cage divisional elements 741 can be made unnecessary or the fixing structure can be simplified.

Moreover, in the wind power generator device 1 of the present embodiment, no speed increaser is provided between the windmill 2 and the rotor 21. This speed increaser normally has a multiplicity of shafts, gears, roller bearings and the like inside and is comparatively liable to break, and by not providing such a device, the durability of the wind power generator device 1 can be enhanced.

Moreover, in the wind power generator device 1 of the present embodiment, since the number of rotations of the rotor 21 is small compared with a device having a speed increaser, in order to obtain an output of a predetermined frequency, the number of magnetic poles (pole number) of the power generator 16 is necessarily increased, so that the size of the rotor 21 increases with this increase in the pole number. Moreover, the size increase of the wind power generator device 1 increases the blade diameter of the windmill 2. When the masses of the rotor 21 and the windmill 2 increase by the size increase thereof as mentioned above, the total mass of the rotating elements when these integrally rotate increases, so that the natural frequency of the rotating elements decreases. For this reason, the natural frequency becomes close to the numbers of rotations of the windmill 2 and the rotor 21, resonance in a twist direction (rotation direction) or a bend direction (direction vertical to the axial center) is liable to occur, and there is a possibility that this resonance makes the rotation fluctuations and vibrations of the rotor 21 extremely large.

In this regard, in the present embodiment, since the one-way clutch 41 is provided between the windmill 2 and the rotor 21, the connection therebetween is released when the rotation speed of the rotor 21 becomes higher than that of the windmill 2 by the rotation fluctuations of the rotor 21. Therefore, the windmill 2 and the rotor 21 are individual rotating elements, the masses of the rotating elements decrease, and the natural frequency increases. Consequently, the condition for resonance is hardly satisfied, so that the occurrence of the rotation fluctuations and vibrations of the rotor 21 can be suppressed.

The present invention is not limited to the above-described embodiment and may be changed as appropriate when carried out. For example, while the outer ring 72 of the one-way clutch 41 is formed in an integral annular shape in the above-described embodiment, it may be formed of a plurality of divisional elements divided in the circumferential direction. Moreover, while the inner ring 71 is divided every cam surface 71a1, it may be divided every two or more cam surfaces 71 a1. The inner ring 81, the outer ring 82 and the cage 74 of the rolling bearings 42 may also be formed of divisional elements divided in the circumferential direction.

The one-way clutch 41 may have a structure where the outer peripheral surface of the inner ring 71 is a cylindrical surface and cam surfaces are formed on the inner peripheral surface of the outer ring 72. Also in this case, the inner ring 71 or the outer ring 72, or both of the inner ring 71 and the outer ring 72 may be formed of divisional elements. Moreover, when the outer ring 72 is divided, it may be divided every cam surface. Also when any of the inner ring 71 and the outer ring 72 is formed of divisional elements, it is preferable to provide slide prevention means for preventing a circumferential slide between the divisional elements and the shaft members coupled thereto.

The engagement elements of the one-way clutch 41 are not limited to the rollers 73 and may be sprags. In this case, it is unnecessary to form a cam surface on the inner ring 71 or the outer ring 72, and the outer peripheral surface of the inner ring 71 and the inner peripheral surface of the outer ring 72 may be cylindrical.

The present invention is not limited to a horizontal shaft type wind power generator device but may also be applied to a vertical shaft type wind power generator device.

The present application is based upon Japanese Patent Application (Patent Application No. 2013-162417) filed on August 5, 2013, the contents of which are incorporated herein by reference.

### Description of Reference Signs

1: Wind power generator device; 2: windmill; 16: power generator; 21: rotor; 30: rotation transmission device; 41: one-way clutch; 71: inner ring; 71 a1: cam surface; 72: outer ring; 73: roller (engagement element); 74: cage; 711: inner ring divisional element; 741: cage divisional element; S: wedge-shaped space.

## Claims

1. A wind power generator device comprising:
a windmill which rotates by receiving wind power;
a power generator comprising a rotor; and
a rotation transmission device which transmits rotation of the windmill to the rotor without a speed increase,
wherein the rotation transmission device comprises a one-way clutch which makes a connection integrally and rotatably between the windmill and the rotor in a state in which a rotation speed of the windmill is higher than a rotation speed of the rotor, and which releases the connection in a state in which the rotation speed of the windmill is lower than the rotation speed of the rotor.

2. The wind power generator device according to claim 1,
wherein the one-way clutch comprises:
an inner ring and an outer ring which are disposed to face each other in a radial direction; and
an engagement element which is disposed between the inner ring and the outer ring, and which engages the inner ring and the outer ring to integrally rotatably connect the inner ring and the outer ring, and
wherein at least one of the inner ring and the outer ring is formed of a plurality of divisional elements divided in a circumferential direction.

3. The wind power generator device according to claim 2,
wherein a plurality of cam surfaces which form wedge-shaped spaces between the inner ring and the outer ring are formed on the inner ring or the outer ring, and
wherein the inner ring or the outer ring comprising the cam surfaces is divided by each of the cam surfaces.

4. The wind power generator device according to any one of claims 1 to 3,
wherein the one-way clutch comprises:
an inner ring and an outer ring which are disposed to face each other in a radial direction;
an engagement element which is disposed between the inner ring and the outer ring, and which engages the inner ring and the outer ring to integrally rotatably connect the inner ring and the outer ring; and
a cage which holds the engagement element, and
wherein the cage is formed of a plurality of divisional elements divided in a circumferential direction.

5. The wind power generator device according to any one of claims 1 to 4,
wherein an outside diameter of the one-way clutch is equal to or larger than 1 meter.

6. A rotation transmission device which transmits a rotation of a windmill which rotates by receiving wind power to a rotor of a power generator without a speed increase, said rotation transmission device comprising:
a one-way clutch which makes connection integrally and rotatably between the windmill and the rotor in a state in which a rotation speed of the windmill is higher than a rotation speed of the rotor, and which releases the connection in a state in which the rotation speed of the windmill is lower than the rotation speed of the rotor.

7. The rotation transmission device according to claim 6,
wherein the one-way clutch comprises:
an inner ring and an outer ring which are disposed to face each other in a radial direction; and
an engagement element which is disposed between the inner ring and the outer ring, and which engages the inner ring and the outer ring to integrally rotatably connect the inner ring and the outer ring, and
wherein at least one of the inner ring and the outer ring is formed of a plurality of divisional elements divided in a circumferential direction.

8. The rotation transmission device according to claim 7,
wherein a plurality of cam surfaces which form wedge-shaped spaces between the inner ring and the outer ring are formed on the inner ring or the outer ring, and
wherein the inner ring or the outer ring comprising the cam surfaces is divided by each of the cam surfaces.

9. The rotation transmission device according to any one of claims 6 to 8,
wherein the one-way clutch comprises:
an inner ring and an outer ring which are disposed to face each other in a radial direction;
an engagement element which is disposed between the inner ring and the outer ring, and which engages the inner ring and the outer ring to integrally rotatably connect the inner ring and the outer ring; and
a cage which holds the engagement element, and
wherein the cage is formed of a plurality of divisional elements divided in a circumferential direction.

10. The rotation transmission device according to any one of claims 6 to 9,
wherein an outside diameter of the one-way clutch is equal to or larger than 1 meter.
